# EUROPEAN PATENT APPLICATION

(11) **EP 4 576 140 A1**
(43) Date of publication of application: **25.06.2025**
(21) Application number: 24211150.8
(22) Date of filing: 06.11.2024
(51) Int. Cl.: H01G 4/30, H01G 4/12, C04B 35/468

(54) **MULTILAYER ELECTRONIC COMPONENT**

(30) Priority: 18.12.2023 KR 20230185093
(71) Applicant: Samsung Electro-Mechanics Co., Ltd., Gyeonggi-do (KR)
(72) Inventor: Kim, Geon Hoi, Suwon-si, Gyeonggi-do (KR); Yoon, Seok Hyun, Suwon-si, Gyeonggi-do (KR); Kwon, Hyung Soon, Suwon-si, Gyeonggi-do (KR); Yun, Byung Kil, Suwon-si, Gyeonggi-do (KR); Koo, Bon Hyeong, Suwon-si, Gyeonggi-do (KR); Lee, Byung Ho, Suwon-si, Gyeonggi-do (KR); Kim, Se Yong, Suwon-si, Gyeonggi-do (KR); Jang, Min Jung, Suwon-si, Gyeonggi-do (KR)
(74) Representative: Grünecker Patent- und Rechtsanwälte PartG mbB

(57) **Abstract**

A multilayer electronic component includes a body including a dielectric layer and internal electrodes; and external electrodes disposed on the body, wherein, when an average thickness of the dielectric layer is defined as td um, the dielectric layer includes secondary phases including Si, the secondary phases include five or more first secondary phases, and each of the five or more first secondary phases includes Si and has a cross-sectional area of 0.01 µm² or more within a td µm x td µm region.

## Description

### CROSS-REFERENCE TO RELATED APPLICATION(S)

This application claims benefit of priority to Korean Patent Application No. 10-2023-0185093 filed on December 18, 2023 in the Korean Intellectual Property Office, the disclosure of which is incorporated herein by reference in its entirety.

### BACKGROUND

### 1. TECHNICAL FIELD

The present disclosure relates to a multilayer electronic component.

### 2. DESCRIPTION OF RELATED ART

A multilayer ceramic capacitor (MLCC), a multilayer electronic component, may be a chip condenser mounted on the printed circuit boards of various electronic products including image display devices such as a liquid crystal display (LCD) and a plasma display panel (PDP), a computer, a smartphone, a mobile phone, or the like, charging or discharging electricity therein or therefrom.

Such a multilayer ceramic capacitor may be used as a component of various electronic devices since a multilayer ceramic capacitor may have a small size and high capacitance and may be easily mounted. As various electronic devices such as a computer and a mobile device have been designed to have a smaller size and higher output, the demand for miniaturization and increased capacitance of multilayer ceramic capacitors has increased.

As the market for an MLCC for IT and also an MLCC for automobiles expands, the demand for products having high rated voltage and excellent reliability in the same capacitance range has increased. Generally, as a grain size decreases and grain boundaries increase, reliability of a dielectric may increase. Among MLCC dielectric composition additive elements, the effect of transition metal elements such as fixed valence acceptors and variable valence acceptors, and rare earth elements on reliability has been known, and generally, conditions with good reliability may be selected through optimization of the composition ratio of dielectric additive elements including the above-mentioned elements. During the more than 30 years since a base metal electrode (BME) MLCC was industrialized, optimization of composition has been continuously conducted to improve reliability, and such cases have already been suggested in patents. Recently, it has been reported that, even with the same dielectric composition, there may be a significant difference in reliability depending on a microstructure, distribution and degree of solid solution of additive elements, and process conditions, and related research has been actively conducted.

### SUMMARY

An embodiment of the present disclosure is to provide a multilayer electronic component having improved reliability.

An embodiment of the present disclosure is to provide a multilayer electronic component satisfying X7R or X7S properties.

An embodiment of the present disclosure is to provide a multilayer electronic component having improved accelerated life at high temperature and pressure.

An embodiment of the present disclosure is to provide a multilayer electronic component having improved capacitance.

According to an embodiment of the present disclosure, a multilayer electronic component includes a body including a dielectric layer and internal electrodes; and external electrodes disposed on the body, wherein, when an average thickness of the dielectric layer is defined as td um, the dielectric layer includes secondary phases including Si, the secondary phases include five or more first secondary phases, and each of the five or more first secondary phases includes Si and has a cross-sectional area of 0.01 µm² or more within a td µm × td µm region.

### BRIEF DESCRIPTION OF DRAWINGS

The and other aspects, features, and advantages of the present disclosure will be more clearly understood from the following detailed description, taken in combination with the accompanying drawings, in which:
FIG. 1 is a perspective diagram illustrating a multilayer electronic component according to an embodiment of the present disclosure;
FIG. 2 is an exploded perspective diagram illustrating a lamination structure of an internal electrode according to an embodiment of the present disclosure;
FIG. 3 is a cross-sectional diagram taken along line I-I' in FIG. 1;
FIG. 4 is a cross-sectional diagram taken along line II-II' in FIG. 1;
FIG. 5 is an enlarged diagram illustrating region P in FIG. 3;
FIG. 6 is an enlarged diagram illustrating region PM in FIG. 5;
FIG. 7 is a diagram illustrating a core-shell dielectric grain according to an embodiment of the present disclosure; and
FIG. 8 is an image of a cross-section of a capacitance formation portion according to an embodiment of the present disclosure using TEM and mapped to Si through EDS mode.

### DETAILED DESCRIPTION

Hereinafter, embodiments of the present disclosure will be described as below with reference to the accompanying drawings.

These embodiments are described in sufficient detail to enable those skilled in the art to practice the invention. It is to be understood that the various embodiments of the invention, although different, are not necessarily mutually exclusive. For example, structures, shapes, and sizes described as examples in embodiments in the present disclosure may be implemented in another embodiment without departing from the spirit and scope of the present disclosure. Further, modifications of positions or arrangements of elements in embodiments may be made without departing from the spirit and scope of the present disclosure. The following detailed description is, accordingly, not to be taken in a limiting sense, and the scope of the present disclosure are defined only by appended claims, appropriately interpreted, along with the full range of equivalents to which the claims are entitled.

In the drawings, same elements will be indicated by same reference numerals. Also, redundant descriptions and detailed descriptions of known functions and elements which may unnecessarily make the gist of the present disclosure obscure will be omitted. In the accompanying drawings, some elements may be exaggerated, omitted or briefly illustrated, and the sizes of the elements do not necessarily reflect the actual sizes of these elements. The terms, "include," "comprise," "is configured to," or the like of the description are used to indicate the presence of features, numbers, steps, operations, elements, portions or combination thereof, and do not exclude the possibilities of combination or addition of one or more features, numbers, steps, operations, elements, portions or combination thereof.

In the drawings, the first direction may be defined as a lamination direction or a thickness (T) direction, the second direction may be defined as a length (L) direction, and the third direction may be defined as a width (W) direction.

### Multilayer Electronic Component

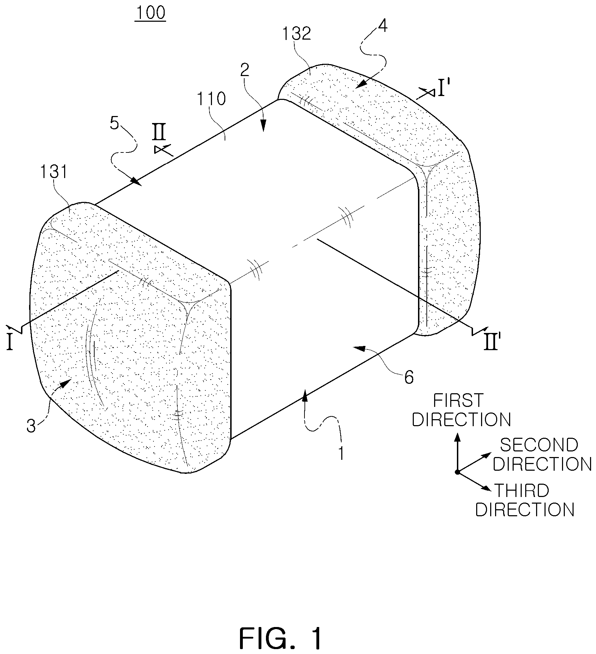

FIG. 1 is a perspective diagram illustrating a multilayer electronic component according to an embodiment.

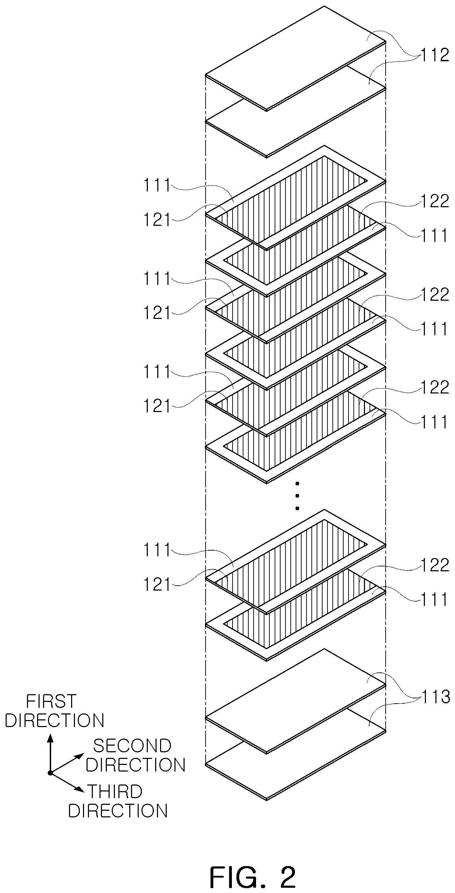

FIG. 2 is an exploded perspective diagram illustrating a lamination structure of an internal electrode according to an embodiment.

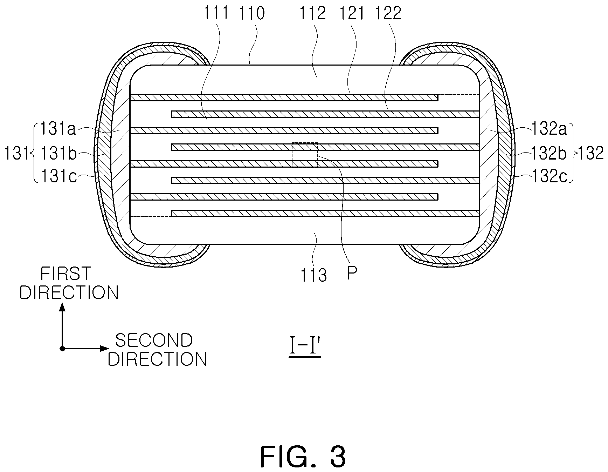

FIG. 3 is a cross-sectional diagram taken along line I-I' in FIG. 1.

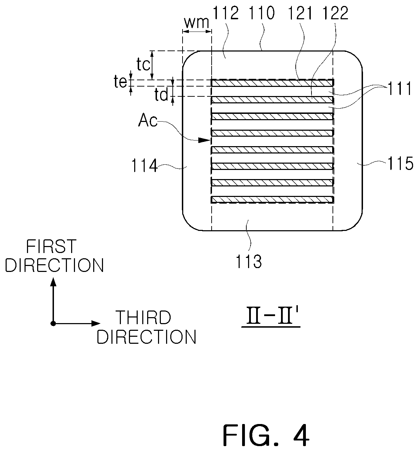

FIG. 4 is a cross-sectional diagram taken along line II-II' in FIG. 1.

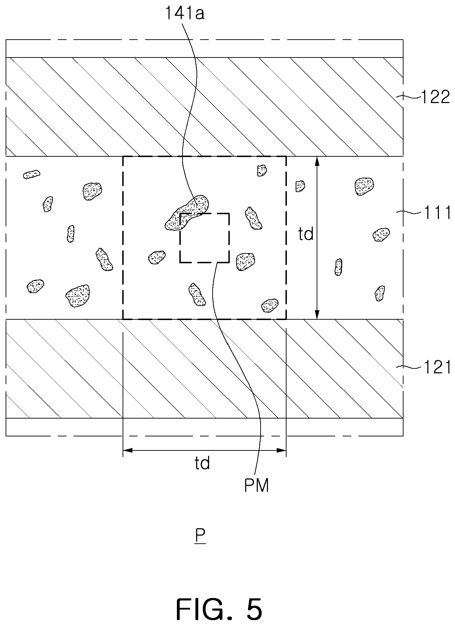

FIG. 5 is an enlarged diagram illustrating region P in FIG. 3.

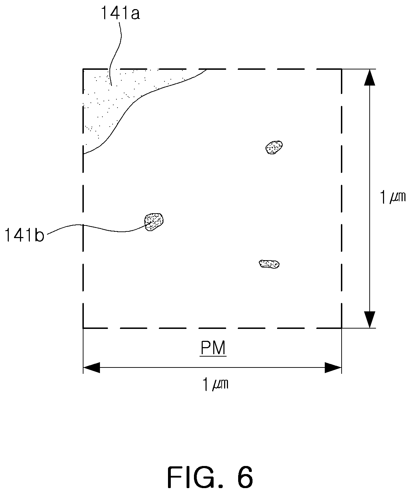

FIG. 6 is an enlarged diagram illustrating region PM in FIG. 5.

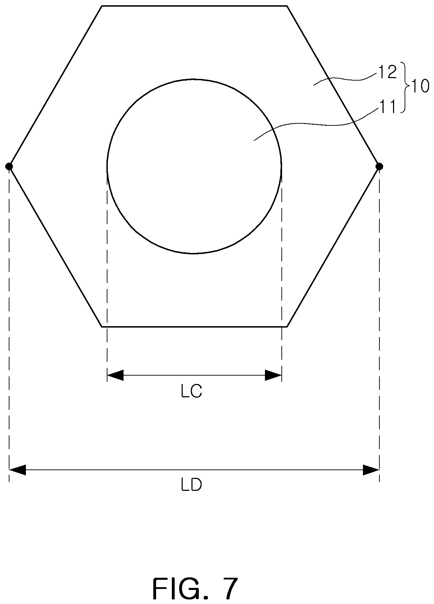

FIG. 7 is a diagram illustrating a core-shell dielectric grain according to an embodiment.

Hereinafter, a multilayer electronic component according to an embodiment will be described in greater detail with reference to FIGS. 1 to 7. A multilayer ceramic capacitor will be described as an example of a multilayer electronic component, but an embodiment thereof is not limited thereto, and the multilayer ceramic capacitor may be applied to various multilayer electronic components, such as an inductor, a piezoelectric element, a varistor, or a thermistor.

A multilayer electronic component 100 according to an embodiment may include a body 110 including a dielectric layer 111 and internal electrodes 121 and 122; and external electrodes 131 and 132 disposed on the body 110, wherein, when an average thickness of the dielectric layer 111 is defined as td um, the dielectric layer 111 may have a cross-sectional area of 0.01 µm² or more within a td um × td µm region and includes five or more secondary phases including Si.

In the body 110, the dielectric layers 111 and the internal electrodes 121 and 122 may be alternately laminated.

More specifically, the body 110 may include a capacitance forming portion Ac disposed in the body 110 and forming capacitance including the first internal electrode 121 and the second internal electrode 122 alternately disposed to face each other with the dielectric layer 111 interposed therebetween.

The shape of the body 110 may not be limited to any particular shape, but as illustrated, the body 110 may have a hexahedral shape or a shape similar to a hexahedral shape. Due to reduction of ceramic powder included in the body 110 during a firing process, the body 110 may not have an exactly hexahedral shape formed by linear lines but may have a substantially hexahedral shape.

The body 110 may have the first and second surfaces 1 and 2 opposing each other in the first direction, the third and fourth surfaces 3 and 4 connected to the first and second surfaces 1 and 2 and opposing in the second direction, and the fifth and sixth surfaces 5 and 6 connected to the first to fourth surfaces 1, 2, 3, and 4 and opposing each other in the third direction.

The plurality of dielectric layers 111 forming the body 110 may be in a fired state, and a boundary between the adjacent dielectric layers 111 may be integrated with each other such that the boundary may not be distinct without using a scanning electron microscope (SEM).

The raw material forming the dielectric layer 111 is not limited as long as sufficient capacitance may be obtained therewith, and generally, a perovskite (ABO₃) material may be used, and for example, a barium titanate material, a lead composite perovskite material, or a strontium titanate material may be used. A barium titanate material may include BaTiO₃ ceramic particles, and an example of the ceramic powder may include BaTiO₃, (Ba₁₋ₓCaₓ)TiO₃ (0<x<1), Ba(Ti_{1-y}Ca_{y})O₃ (0<y<1), (Ba₁₋ₓCaₓ)(Ti_{1-y}Zr_{y})O₃ (0<x<1, 0<y<1) or Ba(Ti_{1-y}Zr_{y})O₃ (0<y<1) in which Ca (calcium) and Zr (zirconium) are partially dissolved.

Also, as a raw material for forming the dielectric layer 111, various ceramic additives, organic solvents, binders, and dispersants may be added to particles such as barium titanate (BaTiO₃) depending on the purpose of the embodiment.

Since the dielectric layer 111 may be formed using a dielectric material such as barium titanate (BaTiO₃), the dielectric layer 111 may include a dielectric microstructure after firing. The dielectric microstructure may include a plurality of grains, a grain boundary disposed between the adjacent grains, and a triple point at which three or more of the grain boundaries are in contact with each other, and a plurality of triple points may be included.

Also, at least one of the plurality of grains may include a core 11 and a core-shell dielectric grain 10 having a shell 12 structure surrounding at least a portion of the core 11, and may include a dielectric grain which may not have a core-shell structure, but an embodiment thereof is not limited thereto.

A thickness td of the dielectric layer 111 may not be limited to any particular example.

To ensure reliability of the multilayer electronic component 100 in a high voltage environment, the thickness of the dielectric layer 111 may be 10.0 um or less. Also, to implement miniaturization and high capacitance of the multilayer electronic component 100, the thickness of the dielectric layer 111 may be 3.0 um or less. To easily implement ultra-miniaturization and high capacitance, the thickness of the dielectric layer 111 may be 1.0 um or less, preferably 0.6 um or less, and more preferably 0.4 um or less.

Here, the thickness td of dielectric layer 111 may indicate the thickness td of at least one of the plurality of dielectric layer 111.

The thickness td of the dielectric layer 111 may refer to the size, in the first direction, of the dielectric layer 111. Also, the thickness td of the dielectric layer 111 may refer to the average thickness td of the dielectric layer 111 and may refer to the average size, in the first direction, of the dielectric layer 111.

The average size, in the first direction, of the dielectric layer 111 may be measured by scanning a cross-section in the first and second directions of the body 110 using a scanning electron microscope (SEM) with a magnification of 10,000. More specifically, the average size, in the first direction, of the dielectric layer 111 may indicate the average value calculated by measuring the sizes, in the first direction, of the dielectric layer 111 at 10 points at an equal distance in the second direction in the scanned image. The 10 points at an equal distance may be specified in the capacitance formation portion Ac. Also, by extending the measurement of the average value to 10 dielectric layers 111, the average size, in the first direction, of the dielectric layer 111 may be further generalized. Other methods and/or tools appreciated by one of ordinary skill in the art, even if not described in the present disclosure, may also be used.

The internal electrodes 121 and 122 may be laminated alternately with the dielectric layer 111.

The internal electrodes 121 and 122 may include a first internal electrode 121 and a second internal electrode 122, the first and second internal electrodes 121 and 122 may be alternately disposed to face each other with the dielectric layer 111 included in the body 110 interposed therebetween, and may be exposed to the third and fourth surfaces 3 and 4 of the body 110, respectively.

More specifically, the first internal electrode 121 may be spaced apart from the fourth surface 4 and may be exposed through the third surface 3, and the second internal electrode 122 may be spaced apart from the third surface 3 and may be exposed through the fourth surface 4. The first external electrode 131 may be disposed on the third surface 3 of the body 110 and may be connected to the first internal electrode 121, and the second external electrode 132 may be disposed on the fourth surface 4 of the body 110 and may be connected to the second internal electrode 122.

That is, the first internal electrode 121 may not be connected to the second external electrode 132 and may be connected to the first external electrode 131, and the second internal electrode 122 may not be connected to the first external electrode 131 and may be connected to the second external electrode 132. In this case, the first and second internal electrodes 121 and 122 may be electrically separated from each other by the dielectric layer 111 disposed therebetween.

The body 110 may be formed by alternately laminating ceramic green sheets on which the first internal electrodes 121 are printed and ceramic green sheets on which the second internal electrodes 122 are printed, and firing the sheets.

The material for forming the internal electrodes 121 and 122 is not limited to any particular example, and a material having excellent electrical conductivity may be used. For example, the internal electrodes 121 and 122 may include one or more of nickel (Ni), copper (Cu), palladium (Pd), silver (Ag), gold (Au), platinum (Pt), tin (Sn), tungsten (W), titanium (Ti), and alloys thereof.

Also, the internal electrodes 121 and 122 may be formed by printing conductive paste for internal electrodes including one or more of nickel (Ni), copper (Cu), palladium (Pd), silver (Ag), gold (Au), platinum (Pt), tin (Sn), tungsten (W), titanium (Ti), and alloys thereof on a ceramic green sheet. A screen printing method or a gravure printing method may be used as a method of printing the conductive paste for internal electrodes, but an embodiment thereof is not limited thereto.

The thickness te of the internal electrodes 121 and 122 may not be limited to any particular example.

To ensure reliability of the multilayer electronic component 100 in a high voltage environment, the thickness te of the internal electrodes 121 and 122 may be 3.0 um or less. Also, to implement miniaturization and high capacitance of the multilayer electronic component 100, the thickness of the internal electrodes 121 and 122 may be 1.0 µm or less. To easily implement ultra-miniaturization and high capacitance, the thickness of the internal electrodes 121 and 122 may be 0.6 um or less, and more preferably 0.4 µm or less.

Also, the thickness te of the internal electrodes 121 and 122 may indicate the size of the internal electrodes 121 and 122 in the first direction. Also, the thickness te of internal electrodes 121 and 122 may indicate the average thickness te of internal electrodes 121 and 122, and may indicate the average size of internal electrodes 121 and 122 in the first direction.

The average size, in the first direction, of the internal electrodes 121 and 122 may be measured by scanning a cross-section of the body 110 using a scanning electron microscope (SEM) with a magnification of 10,000X. More specifically, an average value may be measured from the sizes, in the first direction, of the internal electrode at 10 points at an equal distance in the second direction in the scanned image. The 10 points at an equal distance may be designated in the capacitance formation portion Ac. Also, by extending the measurement of the average value to 10 internal electrodes, the average size of the internal electrodes 121 and 122 may be further generalized.

In an embodiment, the average thickness td of at least one of the plurality of dielectric layers 111 and the average thickness te of at least one of the plurality of internal electrodes 121 and 122 may satisfy 2×te < td.

In other words, the average thickness td of the dielectric layer 111 may be greater than twice the average thickness te of one of the internal electrodes 121 and 122. Preferably, the average thickness td of the plurality of dielectric layers 111 may be greater than twice the average thickness te of the plurality of internal electrodes 121 and 122.

Generally, a high-voltage electronic component may have an issue in terms of reliability due to a decrease in breakdown voltage (BDV) in a high-voltage environment.

Accordingly, to prevent a decrease in breakdown voltage under a high voltage environment, by configuring the average thickness td of the dielectric layer 111 to be larger than twice the average thickness te of the internal electrodes 121 and 122, the thickness of the dielectric layer, which is the distance between the internal electrodes, may be increased and breakdown voltage properties may be improved.

When the average thickness td of the dielectric layer 111 is less than twice the average thickness te of the internal electrodes 121 and 122, the average thickness of the dielectric layer, which is the distance between the internal electrodes, may be reduced such that the breakdown voltage may decrease, and a short may occur between the internal electrodes.

The body 110 may include cover portions 112 and 113 disposed on both end-surfaces of the capacitance forming portion Ac in the first direction.

Specifically, the body 110 may include a first cover portion 112 disposed on one surface in the first direction of the capacitance formation portion Ac and a second cover portion 113 disposed on the other surface in the first direction of the capacitance formation portion Ac. More specifically, the body 110 may include the upper cover portion 112 disposed in the upper portion in the first direction of the capacitance formation portion Ac and the lower cover portions 113 disposed in the lower portion in the first direction of the capacitance formation portion Ac.

The upper cover portion 112 and the lower cover portion 113 may be formed by laminating a single dielectric layer 111 or two or more dielectric layers 111 on the upper and lower surfaces of the capacitance forming portion Ac in the first direction, and may prevent damages to the internal electrodes 121 and 122 due to physical or chemical stress.

The upper cover portion 112 and the lower cover portion 113 may not include the internal electrodes 121 and 122 and may include the same material as that of the dielectric layer 111. That is, the upper cover portion 112 and the lower cover portion 113 may include a ceramic material, for example, a barium titanate (BaTiO₃) ceramic material.

The thickness tc of the cover portion 112 and 113 may not be limited to any particular example.

However, to easily implement miniaturization and high capacitance of multilayer electronic components, the thickness tc of the cover portions 112 and 113 may be 100 um or less, preferably 30 um or less. More preferably, the thickness may be 20 um or less in an ultra-small product.

Here, the thickness tc of the cover portion 112 or 113 may refer to the size, in the first direction, of the cover portion 112 or 113. Also, the thickness tc of the cover portions 112 and 113 may refer to the average thickness tc of the cover portions 112 and 113, and may refer to the average size, in the first direction, of the cover portions 112 and 113.

The average size of the cover portions 112 and 113 may be measured by scanning a cross-section in the first and second directions of the body 110 using a scanning electron microscope (SEM) at a magnification of 10,000. More specifically, the average size may indicate the average value calculated by measuring the sizes, in the first direction, at 10 points at an equal distance in the second direction in the scanned image of the cover portion.

Also, the average size, in the first direction, of the cover portion measured by the above method may be substantially the same as the average size, in the first direction, of the cover portion in the cross-section in the first and third directions of the body 110.

The multilayer electronic component 100 may include side margin portions 114 and 115 disposed on both end-surfaces in the third direction of the body 110.

More specifically, the side margin portions 114 and 115 may include a first side margin portion 114 disposed on the fifth surface 5 and a second side margin portion 115 disposed on the sixth surface 6 of the body 110.

As illustrated, the side margin portions 114 and 115 may refer to a region between both end-surfaces in the third direction of the first and second internal electrodes 121 and 122 and the boundary surface of the body 110 with respect to the cross-section in the first and third directions of the body 110.

The side margin portions 114 and 115 may be formed by forming the internal electrodes 121 and 122 on a ceramic green sheet by applying a conductive paste other than the region in which the side margin portions 114 and 115 are formed, cutting the laminated internal electrodes 121 and 122 to expose the fifth and sixth surfaces 5 and 6 of the body 110 to prevent a step difference caused by the internal electrodes 121 and 122, and laminating a single dielectric layer 111 or two or more dielectric layers 111 in the third direction on both end-surfaces in the third direction of the capacitance forming portion Ac.

The side margin portions 114 and 115 may prevent damages to the internal electrodes 121 and 122 due to physical or chemical stress.

The first side margin portion 114 and the second side margin portion 115 may not include the internal electrodes 121 and 122 and may include the same material as that of the dielectric layer 111. That is, the first side margin portion 114 and the second side margin portion 115 may include a ceramic material, for example, a barium titanate (BaTiO₃) ceramic material.

The width wm of the first and second side margin portions 114 and 115 may not be limited to any particular example.

However, to easily implement miniaturization and high capacitance of the multilayer electronic component 100, the width wm of the side margin portions 114 and 115 may be 100 µm or less, preferably 30 um or less, and may be more preferably 20 µm or less in an ultra-small product.

Here, the width wm of the side margin portions 114 and 115 may refer to the size of the side margin portions 114 and 115 in the third direction. Also, the width wm of the side margin portions 114 and 115 may refer to the average width wm of the side margin portions 114 and 115, and the average size in the third direction of the side margin portions 114 and 115.

The average size in the third direction of the side margin portion 114 and 115 may be measured by scanning a cross-section in the first and third directions of the body 110 using a scanning electron microscope (SEM) at a magnification of 10,000. More specifically, the average size may be an average value measured from the sizes in the third direction at 10 points at an equal distance in the first direction in the scanned image of one of the side margin portions.

In an embodiment, the ceramic electronic component 100 may have two external electrodes 131 and 132, but the number of the external electrodes 131 and 132 or the shape thereof may be varied depending on the forms of the internal electrode 121 and 122 or other purposes.

The external electrodes 131 and 132 may be disposed on the body 110 and may be connected to the internal electrodes 121 and 122.

More specifically, the external electrodes 131 and 132 may be disposed on the third and fourth surfaces 3 and 4 of the body 110, respectively, and may include first and second external electrodes 131 and 132 connected to the first and second internal electrodes 121 and 122, respectively. That is, the first external electrode 131 may be disposed on the third surface 3 of the body and may be connected to the first internal electrode 121, and the second external electrode 132 may be disposed on the fourth surface 4 of the body and may be connected to the second internal electrode 122.

Also, the external electrodes 131 and 132 may extend and be disposed on portions of the first and second surfaces 1 and 2 of the body 110, or may extend and be disposed on a portion of the fifth and sixth surfaces 5 and 6 of the body 110. That is, the first external electrode 131 may be disposed on a portion of the first, second, fifth, and sixth surfaces 1, 2, 5, and 6 of the body 110, and the third surface 3 of the body 110, and the second external electrode 132 may be disposed on a portion of the first, second, fifth, and sixth surfaces 1, 2, 5, and 6 of the body 110, and the third surface 3 of the body 110.

The external electrodes 131 and 132 may be formed of any material having electrical conductivity, such as metal, and a specific material may be determined in consideration of electrical properties and structural stability, and the external electrodes 131 and 132 may have a multilayer structure.

For example, the external electrodes 131 and 132 may include an electrode layer disposed on the body 110 and a plating layer disposed on the electrode layer.

For a more specific example of the electrode layer, the electrode layer may include first electrode layers 131a and 132a, which may be fired electrodes including a first conductive metal and glass, or second electrode layers 131b and 132b, which may be resin-based electrodes including a second conductive metal and resin.

Here, the conductive metal included in the first electrode layers 131a and 132a may be referred to as a first conductive metal, and the conductive metal included in the second electrode layers 131b and 132b may be referred to as a second conductive metal. In this case, the first conductive metal and second conductive metal may be the same or different from each other, and when a plurality of conductive metals are included, only a portion thereof may include the same conductive metal, but an embodiment thereof is not limited thereto.

Also, the electrode layers 131a and 132a, 131b, and 132b may be formed by forming a fired electrode and a resin-based electrode on the body 110 in order.

Also, the electrode layers 131a and 132a, 131b, and 132b may be formed by transferring a sheet including a conductive metal onto the body, or may be formed by transferring a sheet including a conductive metal onto the fired electrode.

A material having excellent electrical conductivity may be used as a conductive metal included in the electrode layers 131a and 132a, 131b, and 132b. For example, the conductive metal may include one or more selected from a group consisting of nickel (Ni), copper (Cu), palladium (Pd), silver (Ag), gold (Au), platinum (Pt), tin (Sn), tungsten (W), titanium (Ti) and alloys thereof, but an embodiment thereof is not limited thereto.

In an embodiment, the electrode layers 131a and 132a, 131b, and 132b may have a two-layer structure including the first electrode layers 131a and 132a and the second electrode layers 131b and 132b, and accordingly, the external electrodes 131 and 132 may include first electrode layers 131a and 132a including a first conductive metal and glass, and second electrode layers 131b and 132b disposed on the first electrode layers 131a and 132a and including a second conductive metal and resin.

The first electrode layers 131a and 132a may improve bondability with the body 110 by including glass, and the second electrode layers 131b and 132b may improve warpage strength by including resin.

The first conductive metal included in the first electrode layers 131a and 132a is not limited to any particular example as long as the material may be electrically connected to the internal electrodes 121 and 122 to form capacitance, and for example, the first conductive metal may include one or more selected from a group consisting of nickel (Ni), copper (Cu), palladium (Pd), silver (Ag), gold (Au), platinum (Pt), tin (Sn), tungsten (W), titanium (Ti) and alloys thereof.

The first electrode layers 131a and 132a may be formed by applying a conductive paste prepared by adding glass frit to the first conductive metal particles and firing the paste.

The second conductive metal included in the second electrode layers 131b and 132b may allow the layers to be electrically connected to the first electrode layers 131a and 132a.

The conductive metal included in the second electrode layers 131b and 132b is not limited to any particular example as long as the material may be electrically connected to the electrode layers 131a and 132a, and may include one or more selected from a group consisting of nickel (Ni), copper (Cu), palladium (Pd), silver (Ag), gold (Au), platinum (Pt), tin (Sn), tungsten (W), titanium (Ti) and alloys thereof.

The second conductive metal included in the second electrode layers 131b and 132b may include one or more of spherical particles and flake-type particles. In other words, the conductive metal may only include flake-type particles, only spherical particles, or may be a mixture of flake-type particles and spherical particles. Here, spherical particles may include shapes not completely spherical, for example, shapes in which the length ratio (major axis/minor axis) between the major axis and the minor axis is 1.45 or higher. Flake-type particles may refer to particles having a flat and elongated shape, and are not limited to any particular example, and for example, a length ratio of the major axis between the minor axis (major axis/minor axis) may be 1.95 or more. The length of the major axis and the minor axis of the spherical particles and the flake-type particles may be measured from an image obtained by scanning the cross-sections in first and second direction of the central portion in the third direction of the multilayer electronic component using a scanning electron microscope (SEM).

The resin included in the second electrode layers 131b and 132b may secure bondability and may absorb impacts. The resin included in the second electrode layers 131b and 132b is not limited to any particular example as long as the resin has bondability and impact absorption properties and may be mixed with second conductive metal particles to create a paste, and may include, for example, an epoxy resin

Also, the second electrode layers 131b and 132b may include a plurality of metal particles, an intermetallic compound and resin. By including an intermetallic compound, electrical connectivity with the first electrode layers 131a and 132a may be improved. The intermetallic compound may improve electrical connectivity by connecting a plurality of metal particles to each other, and may surround a plurality of metal particles and may connect the metal particles to each other.

In this case, the intermetallic compound may include a metal having a melting point lower than a curing temperature of resin. That is, as the intermetallic compound may include a metal having a melting point lower than the curing temperature of resin, the metal having a melting point lower than the curing temperature of the resin may melt during a drying and curing process, may form an intermetallic compound with a portion of the metal particles and may surround the metal particles. In this case, the intermetallic compound may include a low melting point metal, preferably below 300°C.

For example, Sn having a melting point of 213-220°C may be included. During the drying and hardening process, Sn may be melted, and the melted Sn may wet metal particles at high melting points such as Ag, Ni, or Cu by capillary action, may react with a portion of Ag, Ni or Cu metal particles and may form intermetallic compounds such as Ag₃Sn, Ni₃Sn₄, Cu₆Sn₅, or Cu₃Sn. Ag, Ni or Cu not participating in the reaction may remain in the form of metal particles.

Accordingly, the plurality of metal particles may include one or more of Ag, Ni and Cu, and the intermetallic compound may include one or more of Ag₃Sn, Ni₃Sn₄, Cu₆Sn₅ and Cu₃Sn.

The plating layers 131c and 132c may improve mounting properties.

The type of the plating layers 131c and 132c is not limited to any particular example, and the plating layers 131c and 132c may be single-layer plating layers 131c and 132c including at least one of nickel (Ni), tin (Sn), palladium (Pd), and alloys thereof, and may be formed in a plurality of layers.

For a more specific example of the plating layers 131c and 132c, the plating layers 131c and 132c may be Ni plating layers or Sn plating layers, and Ni plating layers and Sn plating layers may be formed in order on the electrode layers, and a Sn plating layer, a Ni plating layer, and a Sn plating layer may be formed in order. Also, the plating layers 131c and 132c may include a plurality of Ni plating layers and/or a plurality of Sn plating layers.

The size of the multilayer electronic component 100 may not be limited to any particular example.

However, to implement both miniaturization and high capacitance, the number of laminates may need to be increased by reducing the thickness of the dielectric layer and the internal electrode, such that the effect described in the embodiments may be noticeable in the multilayer electronic component 100 having a size of 3216 (length × width: 3.2 mm × 1.6 mm) or less.

Hereinafter, the multilayer electronic component 100 according to an embodiment of the present disclosure will be described in greater detail.

In embodiments, the dielectric layer 111 may include a secondary phase 141 including Si, and more specifically, the secondary phase 141 including Si may include the secondary phase 141a (e.g., first secondary phase) including Si having a cross-sectional area of 0.01 µm² or more, and a secondary phase 141b (e.g., second secondary phase) including Si having a cross-sectional area of less than 0.01 µm². However, unless otherwise indicated, the description of the secondary phase 141 including Si may correspond to the description of the secondary phase 141a including Si having a cross-sectional area of 0.01 µm² or more and the description of the secondary phase 141b including Si having a cross-sectional area of less than 0.01 µm².

In the multilayer electronic component 100 according to an embodiment, when the average thickness of the dielectric layer 111 is defined as td um, the dielectric layer 111 may include five or more secondary phases 141a having a cross-sectional area of 0.01 µm² or more within the td µm × td µm region and including Si.

As the dielectric layer 111 includes five or more secondary phases 141a having a cross-sectional area of 0.01 µm² or more within the td µm × td µm region and including Si, high-temperature accelerated life reliability may be improved. For a more specific example of high-temperature accelerated life reliability, properties in which mean time to failure (MTTF) under temperature of 150°C and electric field of 10 V/µm is 100 hours or more.

In addition to improving high-temperature accelerated life reliability, at least one of properties in which room temperature dielectric constant is 2200 or more, properties in which dielectric loss is 10% or lower, properties in which insulation resistance at 150°C is 1.0E+6 Q or more, properties in which a capacitance change rate at -55°C to 125°C based on capacitance at 25° is 15% or lower, properties in which a DC-bias change rate under electric field of 10 V/um is 70% or lower, and properties in which mean time to failure (MTTF) under temperature of 150°C and electric field of 10 V/um is 100 hours or more may be satisfied.

To improve high-temperature accelerated life reliability, the number of the secondary phases 141a having a cross-sectional area of 0.01 µm² or more within the td um × td µm region and including Si is not limited to any particular example, and to prevent other properties from deteriorating, the number of the secondary phases 141a having a cross-sectional area of 0.01 µm² or more within the td µm × td µm region and including Si may be 53 or lower.

When the dielectric layer 111 has less than five secondary phases 141a having a cross-sectional area of 0.01 µm² or more within the td um × td µm region and including Si, high-temperature accelerated life reliability may be deteriorated.

In embodiments, as an example of a more specific method of measuring the content of elements included in each component of the multilayer electronic component 100, as for a destruction method, components may be analyzed using energy dispersive X-ray spectroscopy (EDS) mode of a scanning electron microscope (SEM), EDS mode of a transmission electron microscope (TEM), or scanning transmission electron microscope (TEM) EDS mode in (STEM). First, a thinly sliced analysis sample using a focused ion beam (FIB) device in the region to be measured may be prepared. Thereafter, the damaged layer on the surface of the thinned sample may be removed using xenon (Xe) or argon (Ar) ion milling, and thereafter, qualitative/quantitative analysis may be performed by mapping each component to be measured in the image obtained using SEM-EDS, TEM-EDS, or STEM-EDS. In this case, the qualitative/quantitative analysis graph of each component may be represented in terms of weight percentage (wt%), atomic percentage (at%), or moles percentage (mol%) of each element. In this case, the graph may be represented by converting the number of moles of a specific component to the number of moles of another specific component.

As another method, the chip may be pulverized and the region to be measured may be selected, and components of the portion including the selected dielectric microstructure may be analyzed using devices such as inductively coupled plasma spectrometry (ICP-OES) and inductively coupled plasma mass spectrometry (ICP-MS) devices. Other methods and/or tools appreciated by one of ordinary skill in the art, even if not described in the present disclosure, may also be used.

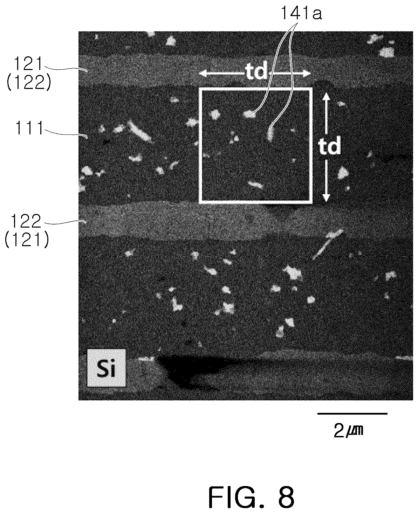

A method of measuring the secondary phase 141 including Si will be described with an example of FIG. 8, an image obtained by obtaining an image obtained using FIGS. 5 and 6 schematically illustrating the cross-section of the capacitance formation portion of an embodiment and the cross-section of the capacitance formation portion of an embodiment using TEM, and mapping Si through EDS mode, and when Si in the first and second direction cross-sections in the center of the third direction of the body 110 is mapped using SEM, TEM, or EDS mode of STEM, the Si collection region observed in the dielectric layer 111 may be defined as the secondary phase 141 including Si.

In other words, assuming that the average thickness of the dielectric layer 111 is defined as td um, the configuration in which five or more secondary phases 141a having a cross-sectional area of 0.01 µm² or more within the td µm × td µm region and including Si are included may indicate that, when the average thickness (average size in the first direction) of the dielectric layer 111 in the image in the cross-section in the first and second directions in the center of the third direction of body 110 using SEM, TEM, or STEM is defined as td µm, and Si is mapped in EDS mode in the image obtained using SEM, TEM, or STEM, five or more secondary phases 141a having a cross-sectional area of 0.01 µm² or more within the td µm × td µm region and including Si may be included in the a region (area) of the dielectric layer 111 having a size of td µm in the first direction and a size of td µm in the second direction.

In this case, the configuration in which five or more secondary phases 141a having a cross-sectional area of 0.01 µm² or more within the td µm × td µm region and including Si are included may not need to be satisfied in the entirety of regions of the dielectric layer 111, and when five or more secondary phases 141a having a cross-sectional area of 0.01 µm² or more within the td µm × td µm region and including Si are included in any td µm × td µm region of the dielectric layer 111, high-temperature accelerated life reliability may improve, but it may be preferable that five or more secondary phases 141a having a cross-sectional area of 0.01 µm² or more within the td µm × td µm region and including Si are included in the td µm × td µm region of the dielectric layer 111 in the entirety of region of the dielectric layer 111.

Here, the cross-sectional area of the secondary phase 141a having a cross-sectional area of 0.01 µm² and including Si may be measured after removing noise of surrounding Si other than the secondary phase 141a having a cross-sectional area of 0.01 µm² and including Si by applying a program filter function of the image analysis program "image pro plus," but an embodiment thereof is not limited thereto. Other methods and/or tools appreciated by one of ordinary skill in the art, even if not described in the present disclosure, may also be used.

The method of measuring the cross-sectional area of the secondary phase 141a having a cross-sectional area of 0.01 µm² or more and including Si may be equally applied to the secondary phase 141b having a cross-sectional area of less than 0.01 µm² and including Si.

Also, in embodiments, "secondary phase" may indicate particles or segregation having a composition or crystal lattice different from the perovskite system (ABO₃) dielectric particles, and may indicate a collection of components not dissolved in a dielectric grain, but an embodiment thereof is not limited thereto.

In other words, the secondary phase may indicate a solid solution or an aggregate of unsubstituted elements in the crystal lattice structure of the grain of barium titanate (BaTiO₃)-based dielectric material, and the secondary phase 141 including Si may indicate a collection of elements including solid solution or unsubstituted Si in the crystal lattice structure of dielectric grain, which is the main component of barium titanate (BaTiO₃).

Also, the dielectric layer 111 may further includes the secondary phase 141b having a cross-sectional area of less than 0.01 µm² in the 1 µm × 1 µm region and including Si.

As the dielectric layer 111 further includes the secondary phase 141b having a cross-sectional area of less than 0.01 µm² in the 1 µm × 1 µm region and including Si, high-temperature accelerated life reliability may improve. For a more specific example of improved high-temperature accelerated life reliability, the properties in which the mean time to failure (MTTF) under temperature of 150°C and electric field of 10 V/um is 200 hours or more may be satisfied.

To improve high-temperature accelerated life reliability, a lower limit of the number of the secondary phase 141b having a cross-sectional area of less than 0.01 µm² in the 1 µm × 1 µm region and including Si is not limited to any particular example, but to prevent deterioration of properties, the number of the secondary phase 141b having a cross-sectional area of less than 0.01 µm² in the 1 µm × 1 µm region and including Si may be one or more.

The configuration may indicate that, when Si is mapped in EDS mode in images of the cross-section in the first and second directions in the center in the third direction of the body 110 using SEM, TEM, or STEM, five or less secondary phases 141b having a cross-sectional area of less than 0.01 µm² and including Si may be included in the region of the dielectric layer 111 having a size of 1 um in the first direction and 1 µm in the second direction.

In this case, the configuration in which five or less secondary phases 141b having a cross-sectional area of less than 0.01 µm² and including Si are included in the entirety of region of the dielectric layer 111 may not need to be satisfied, and when five or less secondary phases 141b having a cross-sectional area of less than 0.01 µm² and including Si are included within any 1 µm × 1 um region of the dielectric layer 111, high-temperature accelerated life reliability may be improved, but it may be preferable that five or less secondary phases 141b having a cross-sectional area of less than 0.01 µm² and including Si are included in the 1 µm × 1 um region of the dielectric layer 111 in the entirety of region of the dielectric layer 111.

In this case, when five or more secondary phases 141a having a cross-sectional area of 0.01 µm² or more within the td µm × td µm region and including Si are included, and five or less secondary phase 141b having a cross-sectional area of less than 0.01 µm² in the 1 µm × 1 µm region and including Si are included, high-temperature accelerated life reliability may improve.

The secondary phase 141 including Si may be different from the composition of the barium titanate (BaTiO₃)-based dielectric grain and may indicate another phase or grain not dissolved in the crystal lattice of barium titanate (BaTiO₃)-based dielectric grain.

For example, as described above, the dielectric layer 111 may include a core-shell dielectric grain 10 having a shell 12 structure surrounding the core 11 and at least a portion of the core 11, and the core 11 or the shell 12 may include Si. The average atomic percentage of Si of the secondary phase 141 including Si may be higher than the average atomic percentage of Si of core 11, or the average atomic percentage of Si in the secondary phase 141 including Si may be higher than the average atomic percentage of Si in shell 12. Also, the average atomic percentage of Ba and Ti in the secondary phase 141 including Si may be higher than the average atomic percentage of Ba and Ti in core 11, or the average atomic percentage of Ba and Ti of the secondary phase 141 including Si may be higher than the average atomic percentage of Ba and Ti of the shell 12. Also, the core 11, the shell 12, or the secondary phase 141 including Si may include Al, and the average atomic percentage of Al in secondary phase 141 including Si may be higher than the average atomic percentage of Al in the core 11, or the average atomic percentage of Al in the secondary phase 141 including Si may be higher than the average atomic percentage of Al in the shell 12.

Also, here, the average atomic percentage of each element included in the secondary phase 141 including Si may indicate the average value of the atomic percentage of each element measured at 3 or more points of the secondary phase 141 including the same Si. The average atomic percentage of each element included in the core 11 or the shell 12 may indicate the average value of the atomic percentage of each element measured at more than 5 points of each element included in the same core 11 or shell 12, but an embodiment thereof is not limited thereto. Other methods and/or tools appreciated by one of ordinary skill in the art, even if not described in the present disclosure, may also be used.

More specifically, the average atomic percentage of Si of the secondary phase 141 including Si may be 5 at% or more and 20 at% or lower, and preferably 8 at% or more and 16 at% or lower.

The average atomic percentage of Si in the secondary phase 141 including Si may satisfy 5 at% or more and 20 at% or lower, such that high-temperature accelerated life reliability may be improved.

When the average atomic percentage of Si in the secondary phase 141 including Si is less than 5 at%, high-temperature accelerated life reliability may be reduced or insulation resistance may be reduced, and when the average atomic percentage of Si in the secondary phase 141 including Si exceeds 20 at%, high-temperature accelerated life reliability may be excellent, but the room temperature dielectric constant may deteriorate.

The average diameter of the plurality of dielectric grains included in the dielectric layer 111 may be 150 nm or more 220 nm or less.

This may correspond to the result of firing a powder in which a size of a base material is 100 nm, but an embodiment thereof is not limited thereto.

As the average diameter of the plurality of dielectric grains included in dielectric layer 111 satisfies 150 nm or more 220 nm or less, high-temperature accelerated life reliability may be further improved, and room temperature dielectric constant, dielectric loss (DF), insulation resistance (IR), or DC-bias properties may be excellent.

When the average diameter of the plurality of dielectric grains included in dielectric layer 111 is less than 150 nm, the room temperature dielectric constant may decrease, and when the average diameter of the plurality of dielectric grains included in dielectric layer 111 is more than 220 nm, high-temperature accelerated life reliability may be reduced or dielectric loss (DF), insulation resistance (IR), or DC-bias properties may be reduced.

The average diameter of the plurality of dielectric grains included in the dielectric layer 111 may be, for example, an average diameter of the plurality of dielectric grains included in the dielectric layer 111 with respect to the 10 µm × 10 um region of the cross-section in the first and second directions in the center in the third direction of the body 110. Here, the diameter of the dielectric grain may indicate the size of an arbitrary linear line passing through the center of the dielectric grain, and may indicate the size of a linear line in the first direction passing through the center of the dielectric grain more specifically, and the average value of the above values may correspond to the average diameter of the plurality of dielectric grains, but an embodiment thereof is not limited thereto. The diameter may be measured by a scanning electron microscope (SEM). Other methods and/or tools appreciated by one of ordinary skill in the art, even if not described in the present disclosure, may also be used.

Also, in the core-shell dielectric grain 10, the diameter of the core 11 may be 90 nm or more and 140 nm or less.

In the core-shell dielectric grain 10, high-temperature accelerated life reliability may be improved by satisfying the diameter of core 11 of 90 nm or more and 140 nm or less, and at least one of room temperature dielectric constant, dielectric loss (DF), insulation resistance (IR), X7R properties (TCC properties), or DC-bias properties, which may be target properties, may be satisfied.

In the core-shell dielectric grain 10, when the diameter of the core 11 is less than 90 nm, high-temperature accelerated life reliability may be reduced or the target room temperature dielectric constant may not be satisfied, and in the core-shell dielectric grain 10, when the diameter of the core 11 exceeds 140 nm, insulation resistance (IR) may be reduced.

In the core-shell dielectric grain 10, the diameter of the core 11 may indicate, for example, the diameter size of the core 11 of the core-shell dielectric grain 10 included in the dielectric layer 111 when mapping rare earth elements, such as dysprosium (Dy) or terbium (Tb), through EDS mode with respect to the 10 µm × 10 um region of the cross-section in the first and second directions in the center in the third direction of the body 110. Here, the diameter of the core 11 may indicate the size of an arbitrary linear line passing through the center of core 11, and may indicate the size of a linear line in the first direction passing through the center of core 11 more specifically, but an embodiment thereof is not limited thereto. Other methods and/or tools appreciated by one of ordinary skill in the art, even if not described in the present disclosure, may also be used.

As described above, the dielectric layer 111 may include a perovskite (ABO₃) main component, for example, barium titanate (BaTiO₃) dielectric material, and may further include a sub-component, and may further include first to fourth sub-components as below more specifically.

### a) First sub-component

According to an embodiment, the dielectric layer 111 may further include first sub-component elements, the first sub-component elements may be variable valence acceptor elements, and the variable valence acceptor elements may be one or more of Mn, V, Cr, Fe, Co, Ni, Cu, Co, and Zn, preferably Mn and V, and more preferably Mn and V.

The first sub-component may be one or more of oxides or carbonates of variable valence acceptor elements, and may be added together with the main component raw materials before firing.

Variable valence acceptor elements, which are the first sub-component elements, may lower firing temperature, improve dielectric properties, insulation resistance (IR) and high-temperature accelerated life properties.

In this case, the number of moles of first sub-component elements based on 100 moles of Ti included in dielectric layer 111 may be 0.4 moles or more and 0.8 moles or less, and when plurality of first sub-component elements are added, the total content combined may be defined as the number of moles of the first sub-component elements.

When the content of the first sub-component elements is less than 0.4 moles based on 100 moles of Ti included in dielectric layer 111, insulation resistance (IR) may be reduced, and when the content of the first sub-component elements exceeds 0.8 moles based on 100 moles of Ti included in the dielectric layer 111, the DC-bias change rate may decrease.

### b) Second sub-component

According to an embodiment, the dielectric layer 111 may further include a second sub-component element, and the second sub-component element may be Mg.

The second sub-component may be one or more of oxides and carbonates of Mg, and may be added together with the main component raw materials before firing.

Mg, the second sub-component element, may provide reduction resistance and may increase reliability class (RC) value. Here, the RC value may indicate reliability according to temperature, reliability at high temperature, reliability at high voltage, life evaluation, or the like.

In this case, the number of moles of second sub-component element based on 100 moles of Ti included in dielectric layer 111 may be more than 0 moles and 1 mole or less.

When the second sub-component element is not added to the dielectric layer 111, for example, when the content of second sub-component elements is 0 moles based on 100 moles of Ti included in the dielectric layer 111, reliability may be reduced. When the content of second sub-component elements exceeds 1 mole based on 100 moles of Ti included in the dielectric layer 111, X7R temperature properties (capacitance change rate at -55°C to 125°C based on the capacitance value at 25°C may be -15% or more and 15% or lower) may not be satisfied.

### c) Third sub-component

According to an embodiment, the dielectric layer 111 may further include third sub-component elements, the third sub-component elements may be rare earth elements, and the rare earth elements may include at least one of Y, Dy, Tb, Gd, Ce, Nd, La and Yb, preferably at least one of Dy and Tb, and more preferably, Dy and Tb.

Rare earth elements, which are the third sub-component elements, may improve high-temperature accelerated life and may improve reliability.

The third sub-component may be one or more of oxides and carbonates of rare earth elements and may be added together with the main component raw materials before firing.

In this case, the number of moles of the third sub-component elements based on 100 moles of Ti included in dielectric layer 111 may be 2.5 moles or more 3.5 moles or less.

When the number of moles of the third sub-component elements is less than 2.5 moles based on 100 moles of Ti included in dielectric layer 111, the high-temperature accelerated life may be reduced, and when the number of moles of the third sub-component elements exceeds 3.5 moles based on 100 moles of Ti included in the dielectric layer 111. insulation resistance (IR) may be reduced or high-temperature accelerated life may be reduced due to n-type semiconductorization of the dielectric.

### d) Fourth sub-component

According to an embodiment, the dielectric layer 111 may further include a fourth sub-component element, and the fourth sub-component element may be Si.

The fourth sub-component may be at least one of Si oxide, Si carbonate and glass including Si, and may be added together with the main component raw materials before firing.

Si, the fourth sub-component element, may sinter aid, may induce grain growth of dielectric grains, and may improve insulation resistance (IR) or high-temperature accelerated life.

In this case, the number of moles of the fourth sub-component element based on 100 moles of Ti included in dielectric layer 111 may be 0.8 moles or more and 2.0 moles or less.

When the number of moles of the fourth sub-component elements is less than 0.8 moles based on 100 moles of Ti included in dielectric layer 111, insulation resistance (IR) may be reduced or high-temperature accelerated life may be reduced, and when the number of moles of the fourth sub-component element exceeds 2.0 moles based on 100 moles of Ti included in the dielectric layer 111, there the dielectric constant at room temperature may decrease.

The multilayer electronic component 100 according to an embodiment may satisfy properties of mean time to failure (MTTF) of 100 hours or more under a condition of temperature of 150°C and an electric field of 10 V/µm.

Also, the multilayer electronic component 100 according to an embodiment may satisfy at least one of properties in which room temperature dielectric constant is 2200 or more, properties in which dielectric loss is 10% or lower, properties in which insulation resistance at 150°C is 1.0E+6 Q or more, properties in which a capacitance change rate at -55°C to 125°C based on capacitance at 25° is 15% or lower, properties in which a DC-bias change rate under electric field of 10 V/um is 70% or lower, and properties in which mean time to failure (MTTF) under temperature of 150°C and electric field of 10 V/µm is 100 hours or more. These properties may be measured by methods and/or tools appreciated by one of ordinary skill in the art, even if not described in the present disclosure.

Whether the corresponding properties are satisfied will be described in greater detail through the embodiments as below, but it is to help understanding of the present disclosure and the scope of the embodiments is not limited thereto.

### (Embodiment)

Tables 1, 3, and 5 list a size of a base material, firing temperature, and first to fourth sub-component elements of the dielectric layer. The unit of a size of the base material is nm, the firing temperature is °C, and the amount of the first to fourth sub-component is the number of moles of the first to fourth sub-component elements. For example, in 1-1 test example, 0.2 moles of first sub-component MnOz is 0.2 moles of Mn, 0.2 moles of first sub-component V₂O₅ is 0.2 moles of V, 0.6 moles of second sub-component MgCO₃ is 0.6 moles of Mg, 3.0 moles of third sub-component Dy₂O₃ is 3.0 moles of Dy, 0.2 moles of third sub-component Tb₄O₇ is 0.2 moles of Tb, and 1.2 moles of the fourth sub-component SiO₂ is 1.2 moles of Si.

BaTiO₃ powder having average particle sizes of 100, 150, and 200 nm was used as the main component base material. Using zirconia beads as a mixing/dispersing media, raw material powder including sub-component elements corresponding to the composition specified in Tables 1, 3, and 5 and main component BaTiO₃ powder were mixed with ethanol/toluene solvent and dispersant, was milled for 10 hours, mixed with a binder, and further milled for 5 hours, thereby preparing slurry. The slurry prepared as above was used to manufacture molded sheets having thicknesses of 3.0 um and 10 um using a sheet manufacturing machine. Thereafter, nickel (Ni) internal electrodes were printed on the molded sheet. The upper and lower covers were manufactured by laminating 25 layers of cover sheets (thickness between 10 µm and 13 µm), and 21 layers of printed sheets were pressed and laminated, thereby forming a bar. The pressed bar was cut into chips of size 3216 (length × width: 3.2 mm × 1.6 mm) using a cutter. The manufactured 3216 sized MLCC chip was plasticized, fired for two hours of holding time at a temperature of 1150°C to 1200°C in a reducing atmosphere of 0.1%H₂ / 99.9%N₂ - 0.5 %H₂ / 99.5%N₂ (H₂O / H₂ / N₂ atmosphere), and reoxidized for 3 hours in an N₂ atmosphere at 1000°C. Here, 0.1% H₂ concentration is the condition of electromotive force of 670 mV in an 850°C measurement environment in an oxygen partial pressure meter, and 0.5% H2 concentration is the condition of electromotive force of 760 mV. For the fired chip, an external electrode was completed through a termination process and electrode firing using copper (Cu) paste. Accordingly, after firing, the 3216-sized MLCC chip including a dielectric layer having thickness of approximately 2.0 um and the number of dielectric layers between the internal electrodes is 20.

A in Tables 2, 4, and 6 is the number of secondary phases 141a having a cross-sectional area of 0.01 µm² or more within the td um × td um region and including Si when the average thickness of the dielectric layer in the capacitance formation portion is defined as td based on the cross-section in the first and second directions in the center in the third direction of the body. B is the number of the secondary phase 141b having a cross-sectional area of less than 0.01 µm² in the 1 µm × 1 µm region and including Si based on the cross-section in the first and second direction in the center in the third direction of the body.

For dielectric constant and dielectric loss (DF), the capacitance or capacitance change rate of the room temperature capacitance of the MLCC chip was measured using an LCR meter at 1 kHz and AC 0.5 V/um, and the dielectric constant of the MLCC chip from the capacitance, dielectric layer thickness of the MLCC chip, internal electrode area, and the number of dielectric layer laminates were calculated. When the dielectric constant was 2200 or more, the sample was evaluated as excellent, and when less than 2200, the sample was evaluated as poor. When dielectric loss (DF) was 10% or lower, the sample was assessed as excellent, and when exceeding 10%, the sample was assessed as poor.

IR (room temperature insulation resistance) was measured by taking 10 samples and measuring the insulation resistance value at a temperature of 150°C. IR was evaluated as excellent when IR was 1.0E+6 Q or more, and IR was evaluated as poor when IR was less than 1.0E+6 Q.

TCC properties (change in capacitance depending on temperature) was measured by measuring the rate of change in capacitance over a temperature range of -55°C to 125°C based on the capacitance at 25°C. TCC properties were evaluated as excellent when the capacitance change rate was -15% or more +15% or lower in the temperature range of -55°C to 125°C, and when exceeding the range, the sample was evaluated as poor.

The DC-bias change rate was measured by taking 10 samples and measuring the capacitance after 60 seconds while applying DC 10V/pm. The sample was evaluated as excellent when the DC-bias change rate was -70% or more (that is, the capacitance change reduction rate based on the standard capacitance is -70% - 0%), and when less than -70%, the sample was evaluated as poor.

As for MTTF, a highly accelerated life time test (HALT) was performed, and for 40 samples per test example, a voltage corresponding to an electric field of 40 V/um was applied at 150°C, the time for failure to occur was measured and the mean time to failure (MTTF) was calculated. When MTTF was 100 hours or more, the sample was evaluated as excellent, and when 200 hours or more, the sample was evaluated as very excellent, and when less than 100 hours, the sample was evaluated as poor.

**[Table 1]**

| Test example | Size of base material (nm) | Firing temperat ure(°C) | First sub-component (mol) | | Second sub-componen t (mol) | Third sub-component (mol) | | Fourth subcomponen t (mol) |
|---|---|---|---|---|---|---|---|---|
| | | | MnO₂ | V₂O₅ | MgCO₃ | Dy₂O₃ | Tb₄O₇ | SiO₂ |
| 1-1 | 100 | 1160 | 0.2 | 0.2 | 0.6 | 3.0 | 0.2 | 1.2 |
| 1-2 | 100 | 1170 | 0.2 | 0.2 | 0.6 | 3.0 | 0.2 | 1.2 |
| 1-3 | 100 | 1180 | 0.2 | 0.2 | 0.6 | 3.0 | 0.2 | 1.2 |
| 1-4 | 100 | 1190 | 0.2 | 0.2 | 0.6 | 3.0 | 0.2 | 1.2 |
| 2-1 | 150 | 1160 | 0.2 | 0.2 | 0.6 | 3.0 | 0.2 | 1.2 |
| 2-2 | 150 | 1170 | 0.2 | 0.2 | 0.6 | 3.0 | 0.2 | 1.2 |
| 2-3 | 150 | 1180 | 0.2 | 0.2 | 0.6 | 3.0 | 0.2 | 1.2 |
| 2-4 | 150 | 1190 | 0.2 | 0.2 | 0.6 | 3.0 | 0.2 | 1.2 |
| 3-1 | 200 | 1160 | 0.2 | 0.2 | 0.6 | 3.0 | 0.2 | 1.2 |
| 3-2 | 200 | 1170 | 0.2 | 0.2 | 0.6 | 3.0 | 0.2 | 1.2 |
| 3-3 | 200 | 1180 | 0.2 | 0.2 | 0.6 | 3.0 | 0.2 | 1.2 |
| 3-4 | 200 | 1190 | 0.2 | 0.2 | 0.6 | 3.0 | 0.2 | 1.2 |

**[Table 2]**

| Test example | A | B | Dielect ric constan t | DF (%) | IR (Ω) | TCC (%) @-55°C | TCC (%) @125°C | DC-bias change rage (%) | MTTF (hrs) |
|---|---|---|---|---|---|---|---|---|---|
| 1-1 | 13 | 3 | 1863 | 2.57 | 9.1E+5 | -13.4 | -14.2 | -67.0 | 209 |
| 1-2 | 14 | 2 | 2614 | 4.08 | 1.3E+6 | -13.8 | -14.4 | -67.4 | 241 |
| 1-3 | 18 | 2 | 2894 | 4.31 | 1.5E+6 | -14.1 | -14.7 | -68.2 | 283 |
| 1-4 | 21 | 2 | 3172 | 10.72 | 1.8E+6 | -14.8 | -15.1 | -66.5 | 202 |
| 2-1 | 2 | 7 | 1778 | 2.37 | 8.3E+5 | -12.8 | -13.2 | -67.8 | 73 |
| 2-2 | 3 | 8 | 2541 | 4.02 | 1.1E+6 | -13.0 | -13.5 | -68.3 | 107 |
| 2-3 | 3 | 6 | 2967 | 4.25 | 1.3E+6 | -13.4 | -13.8 | -69.0 | 134 |
| 2-4 | 4 | 8 | 3304 | 11.56 | 1.4E+6 | -13.8 | -14.5 | -69.5 | 91 |
| 3-1 | 0 | 13 | 1778 | 1.94 | 6.3E+5 | -12.3 | -13.2 | -68.5 | - |
| 3-2 | 0 | 11 | 1783 | 2.37 | 8.3E+5 | -12.5 | -13.7 | -69.1 | 45 |
| 3-3 | 1 | 15 | 2547 | 4.35 | 1.1E+6 | -13.0 | -13.5 | -69.7 | 83 |
| 3-4 | 5 | 10 | 2834 | 4.93 | 1.3+6 | -13.2 | -13.5 | -71.1 | 103 |

Test examples 1-1 to 3-4 in Table 1 are test examples according to BaTiO₃ average size and firing temperature when the sum of the first sub-component elements Mn and V was 0.4 moles based on 100 mol of main component BaTiO₃, the content of Mg, the second sub-component elements, was 0.6 moles, the sum of rare earth elements Dy and Tb, which are the third sub-component elements, was 3.2 moles, and the content of fifth sub-component Si was 1.2 moles, and test examples 1-1 to 3-4 in Table 2 indicate properties of the samples corresponding to the test examples. As for sizes of base material 100 nm, 150 nm, and 200 nm, at the firing temperature of 1160°C, a size of base material of 200 nm did not occur properly even at the firing temperature of 1170°C (test examples 1-1, 2-1, 3-1, and 3-2), such that target properties in the embodiments, dielectric constant≥2200, IR≥1.0E+6 Ω, and MTTF≥100 hrs, were not satisfied.

There was a large change in microstructure, dielectric properties, and reliability properties depending on the firing conditions. Differently from the 1160°C sample, when the firing temperature was 1170°C and 1180°C (test examples 1-2, 1-3, 2-2, 2-3, and 3-3), grain growth and densification occurred within the normal range. Accordingly, the dielectric constant, room temperature IR, DC-bias change rate, and MTTF were satisfied. However, there was a noticeable difference in MTTF values depending on the size of base material. Even at the same firing temperature, the MTTF of the MLCC using a size of base material of 100 nm BaTiO₃ was twice as high as that of the MLCC using 150 nm and 200 nm BaTiO₃. Test examples having more than 10 As were MLCC having 100 nm BaTiOs, whereas MLCCs using 150nm and 200nm BaTiO₃ indicate a clear difference in that A ranged from 0 to 4. Also, in relation to the number of B, MLCC having 100 nm BaTiO₃ has two to three Bs, and MLCC having 150 nm BaTiO₃ has 6 to 15 Bs, which is also a significant difference. Due to the difference in the number of A and B, the MTTF was greatly improved.

MLCC manufactured to have a size of base material of 100 nm and 150 nm had DF>10% and MTTF<100 hrs due to excessive grain growth at the firing temperature of 1190°C, such that the targets in the embodiments were not satisfied. As for 200 nm base material MLCC, the temperature was an appropriate firing temperature at 1190°C, such that the target values of the embodiments such as dielectric constant, IR, and MTTF were reached, but as a large-sized BaTiO₃ base material was used, the DC-bias change rate was deviated from the target.

**[Table 3]**

| Test example | Size of base material (nm) | Firing temperat ure (°C) | First sub-component (mol) | | Second sub-componen t (mol) | Third sub-component (mol) | | Fourth sub-componen t (mol) |
|---|---|---|---|---|---|---|---|---|
| | | | MnO₂ | V₂O₅ | MgCO₃ | Dy₂O₃ | Tb₄O₇ | SiO₂ |
| 4-1 | 100 | 1170 | 0.2 | 0.2 | 0.6 | 3.0 | 0.2 | 0.8 |
| 4-2 | 100 | 1170 | 0.2 | 0.2 | 0.6 | 3.0 | 0.2 | 1.2 |
| 4-3 | 100 | 1170 | 0.2 | 0.2 | 0.6 | 3.0 | 0.2 | 1.6 |
| 4-4 | 100 | 1170 | 0.2 | 0.2 | 0.6 | 3.0 | 0.2 | 2.0 |
| 4-5 | 100 | 1170 | 0.2 | 0.2 | 0.6 | 3.0 | 0.2 | 3.0 |
| 5-1 | 150 | 1170 | 0.2 | 0.2 | 0.6 | 3.0 | 0.2 | 0.8 |
| 5-2 | 150 | 1170 | 0.2 | 0.2 | 0.6 | 3.0 | 0.2 | 1.2 |
| 5-3 | 150 | 1170 | 0.2 | 0.2 | 0.6 | 3.0 | 0.2 | 1.6 |
| 5-4 | 150 | 1170 | 0.2 | 0.2 | 0.6 | 3.0 | 0.2 | 2.0 |
| 5-5 | 150 | 1170 | 0.2 | 0.2 | 0.6 | 3.0 | 0.2 | 3.0 |

**[Table 4]**

| Test example | A | B | Dielect ric constan t | DF (%) | IR (Ω) | TCC (%) @-55°C | TCC (%) @125°C | DC-bias change rage (%) | MTTF (hrs) |
|---|---|---|---|---|---|---|---|---|---|
| 4-1 | 3 | 2 | 2673 | 4.07 | 8.0E+5 | -13.8 | -14.5 | -67.0 | 81 |
| 4-2 | 14 | 2 | 2614 | 4.08 | 1.3E+6 | -13.8 | -14.4 | -67.4 | 241 |
| 4-3 | 21 | 3 | 2533 | 4.03 | 2.0E+6 | -13.7 | -14.2 | -68.0 | 318 |
| 4-4 | 25 | 2 | 2379 | 4.05 | 2.3E+6 | -13.5 | -14.2 | -68.5 | 327 |
| 4-5 | 53 | 10 | 1935 | 2.75 | 3.3E+6 | -14.0 | -13.7 | -67.2 | 383 |
| 5-1 | 0 | 9 | 2593 | 4.01 | 7.8E+5 | -13.2 | -13.7 | -67.9 | 67 |
| 5-2 | 5 | 8 | 2541 | 4.02 | 1.1E+6 | -13.0 | -13.5 | -68.3 | 107 |
| 5-3 | 9 | 11 | 2461 | 3.97 | 1.9E+6 | -13.1 | -13.5 | -68.9 | 182 |
| 5-4 | 11 | 9 | 2391 | 3.91 | 2.1E+6 | -12.8 | -13.4 | -69.2 | 173 |
| 5-5 | 43 | 15 | 2033 | 2.57 | 3.2E+6 | -13.7 | -12.9 | -68.0 | 253 |

Test examples 4-1 to 5-5 in Table 3 indicate test examples according to changes in the content and a size of base material of the fourth sub-component elements based on 100 mol of main component BaTiO₃ base material, and Table 4 indicates properties of the samples corresponding to the test examples 4-1 to 5-5. When the content of Si, the fourth sub-component elements, is 1 moles or less (test examples 4-1 and 5-1), A value was low or not present, such that 100 hours in the embodiments, the MTTF target, was not exceeded. As Si, the fourth sub-component element, was increased from 1.2 moles to 2 moles (test examples 4-2, 4-3, 4-4, 5-2, 5-3, and 5-4), the dielectric constant decreased, but the target properties, 2200 or more, was maintained and the MTTF properties was also satisfied. According to the result of examining the properties of samples having 10 A values or more than and 5 B values or less than (test examples 4-2, 4-3, and 4-4), MTTF properties increased by about 100-200% as compared to samples not satisfying the target conditions (test example 5-2, 5-3, and 5-4). In the case of the composition sample (test example 4-5, 5-5) in which the content of Si, the fourth sub-component element, was 3, which is excessively added, accelerated life was extremely high due to the influence of fourth sub-component element Si, which had high insulation resistance, whereas the dielectric constant did not reach the target properties.

**[Table 5]**

| Test example | Size of base material (nm) | Firing temperat ure(°C) | First sub-component (mol) | | Second sub-componen t (mol) | Third sub-component (mol) | | Fourth sub-componen t (mol) |
|---|---|---|---|---|---|---|---|---|
| | | | MnO₂ | V₂O₅ | MgCO₃ | Dy₂O₃ | Tb₄O₇ | SiO₂ |
| 6-1 | 100 | 1170 | 0.0 | 0.0 | 0.6 | 3.0 | 0.2 | 1.2 |
| 6-2 | 100 | 1170 | 0.2 | 0.2 | 0.6 | 3.0 | 0.2 | 1.2 |
| 6-3 | 100 | 1170 | 0.4 | 0.4 | 0.6 | 3.0 | 0.2 | 1.2 |
| 6-4 | 100 | 1170 | 0.8 | 0.8 | 0.6 | 3.0 | 0.2 | 1.2 |
| 7-1 | 150 | 1170 | 0.0 | 0.0 | 0.6 | 3.0 | 0.2 | 1.2 |
| 7-2 | 150 | 1170 | 0.2 | 0.2 | 0.6 | 3.0 | 0.2 | 1.2 |
| 7-3 | 150 | 1170 | 0.4 | 0.4 | 0.6 | 3.0 | 0.2 | 1.2 |
| 7-4 | 150 | 1170 | 0.8 | 0.8 | 0.6 | 3.0 | 0.2 | 1.2 |
| 8-1 | 100 | 1170 | 0.2 | 0.2 | 0.6 | 1.0 | 0.2 | 1.2 |
| 8-2 | 100 | 1170 | 0.2 | 0.2 | 0.6 | 2.0 | 0.2 | 1.2 |
| 8-3 | 100 | 1170 | 0.2 | 0.2 | 0.6 | 3.0 | 0.2 | 1.2 |
| 8-4 | 100 | 1170 | 0.2 | 0.2 | 0.6 | 4.0 | 0.2 | 1.2 |
| 9-1 | 150 | 1170 | 0.2 | 0.2 | 0.6 | 1.0 | 0.2 | 1.2 |
| 9-2 | 150 | 1170 | 0.2 | 0.2 | 0.6 | 2.0 | 0.2 | 1.2 |
| 9-3 | 150 | 1170 | 0.2 | 0.2 | 0.6 | 3.0 | 0.2 | 1.2 |
| 9-4 | 150 | 1170 | 0.2 | 0.2 | 0.6 | 4.0 | 0.2 | 1.2 |

**[Table 6]**

| Test example | A | B | Dielect ric constan t | DF (%) | IR (Ω) | TCC (%) @-55°C | TCC (%) @125°C | DC-bias change rage (%) | MTTF (hrs) |
|---|---|---|---|---|---|---|---|---|---|
| 6-1 | 7 | 2 | 2691 | 4.07 | 8.3E+5 | -14.0 | -14.8 | -66.8 | 205 |
| 6-2 | 14 | 2 | 2614 | 4.08 | 1.3E+6 | -13.8 | -14.4 | -67.4 | 241 |
| 6-3 | 16 | 3 | 2524 | 4.12 | 2.1E+6 | -13.7 | -14.2 | -69.5 | 306 |
| 6-4 | 10 | 2 | 2217 | 4.10 | 2.8E+6 | -13.5 | -14.1 | -71.2 | 216 |
| 7-1 | 3 | 10 | 2678 | 4.05 | 8.8E+5 | -13.5 | -13.7 | -67.5 | 91 |
| 7-2 | 5 | 8 | 2541 | 4.02 | 1.1E+6 | -13.0 | -13.5 | -68.3 | 107 |
| 7-3 | 7 | 5 | 2317 | 4.05 | 1.9E+6 | -12.9 | -13.3 | -70.3 | 226 |
| 7-4 | 2 | 11 | 2151 | 4.04 | 2.4E+6 | -12.8 | -13.2 | -71.5 | 66 |
| 8-1 | 6 | 1 | 3155 | 5.11 | 2.4E+6 | -13.7 | -14.7 | -69.1 | 207 |
| 8-2 | 8 | 2 | 2916 | 4.53 | 1.9E+6 | -13.5 | -14.5 | -68.5 | 223 |
| 8-3 | 14 | 2 | 2614 | 4.08 | 1.3E+6 | -13.8 | -14.4 | -67.4 | 241 |
| 8-4 | 8 | 2 | 2376 | 3.79 | 7.1E+5 | -13.2 | -13.6 | -65.3 | 221 |
| 9-1 | 2 | 7 | 2994 | 4.97 | 2.3E+6 | -13.5 | -14.9 | -71.1 | - |
| 9-2 | 2 | 8 | 2763 | 4.65 | 1.8E+6 | -13.2 | -14.5 | -69.1 | 66 |
| 9-3 | 3 | 8 | 2541 | 4.02 | 1.1E+6 | -13.0 | -13.5 | -68.3 | 107 |
| 9-4 | 5 | 6 | 2247 | 3.67 | 6.2E+5 | -12.7 | -13.0 | -67.7 | 137 |

Test examples 6-1 to 7-4 in Table 5 indicates test examples according to the change in content of sizes of the base material and the first sub-component elements and the content of third sub-component elements based on 100 mol of main component BaTiO₃ base material. Table 6 indicates the properties of the samples corresponding to the test examples 6-1 to 7-4. Samples without variable valence elements Mn and V, which are the first sub-component elements, had significantly fewer trap sites in the material, such that the IR was lower than the target value in the embodiments (test examples 6-1 and 7-1). However, test examples 6-1 had a higher A value and a lower B value than 7-1, such that the MTTF was evaluated as higher in test example 6-1. In test examples 6-2 to 6-4, the A value was 10 or more and the B value was 5 or less, which satisfies MTTF≥100 hrs, the high temperature reliability target properties in the embodiments. However, test example 6-4 was a composition in which the total of the first sub-component elements was excessively input, and the DC-bias change rate was -70% or more, such that the target in the embodiments was not reached. Test examples 7-2 to 7-4 have the same composition as in test examples 6-2 to 6-4, but there was a clear difference in the A value and B value. In other words, the condition of A values of 10 or more and B values of 5 or less were not satisfied, such that there was a significant different in the high-temperature acceleration lifespan.

Test examples 8-1 to 9-4 indicate test examples based on changes in content of the size of base material and third sub-component elements. As the rare earth elements, which are the third sub-component elements, were increased, the dielectric constant decreases, and the IR decreased due to n-type in the material. However, in high-temperature accelerated life evaluation, MTTF was improved by weakening mobility of oxygen vacancies. Test examples 8-1, 8-2, 9-1, and 9-2 were MLCC samples to which a small amount of third sub-component elements was added, and high-temperature accelerated life decreased as compared to test examples 8-3 and 9-3 in which 3 moles of third sub-component elements were added. As observed, as rare earth elements which are the third sub-component elements were added, reliability was improved. This had the effect of suppressing the oxygen vacancy mobility of rare earth elements, and also the effect of increasing reliability by forming a secondary phase (pyrochlore) including rare earth elements and Si. Also, in test example 8-3, the A value was higher than that of 9-3, and although the composition was the same, the MTTF was about 2.4 times different. Samples to which 4 moles of rare earth elements were added had excessive n-type dielectric, such that IR was greatly deteriorated, and properties conditions in the embodiments were not satisfied.

According to the aforementioned embodiments, the multilayer electronic component may have improved reliability.

Also, the multilayer electronic component may satisfy X7R or X7S properties.

Also, the multilayer electronic component may have improved accelerated life at high temperature and pressure.

Also, the multilayer electronic component may have improved capacitance.

The embodiments do not necessarily limit the scope of the embodiments to a specific embodiment form. Instead, modifications, equivalents and replacements included in the disclosed concept and technical scope of this description may be employed. Throughout the specification, similar reference numerals are used for similar elements.

In the embodiments, the term "embodiment" may not refer to one same embodiment, and may be provided to describe and emphasize different unique features of each embodiment. The suggested embodiments may be implemented do not exclude the possibilities of combination with features of other embodiments. For example, even though the features described in an embodiment are not described in the other embodiment, the description may be understood as relevant to the other embodiment unless otherwise indicated.

Terms used in the present specification are for explaining the embodiments rather than limiting the embodiments. Unless explicitly described to the contrary, a singular form may include a plural form in the present specification

While the embodiments have been illustrated and described above, it will be configured as apparent to those skilled in the art that modifications and variations could be made without departing from the scope of the present disclosure as defined by the appended claims.

## Claims

1. A multilayer electronic component (100), comprising:
a body (110) including a dielectric layer (111) and internal electrodes (121, 122); and
external electrodes (131, 132) disposed on the body (110),
wherein, when an average thickness of the dielectric layer (111) is defined as td um, the dielectric layer (111) includes secondary phases including Si, the secondary phases (141) include five or more first secondary phases (141a), and each of the five or more first secondary phases (141a) includes Si and has a cross-sectional area of 0.01 µm² or more within a td µm × td µm region.

2. The multilayer electronic component (100) of claim 1,
wherein the secondary phases further include five or less second secondary phases (141b), and each of the second secondary phases (141b) includes Si and has a cross-sectional area of less than 0.01 µm² within a 1 µm × 1 µm region.

3. The multilayer electronic component (100) of claim 1, wherein an average atomic percentage of Si in at least one of the secondary phases (141) is 5 at% or more and 20 at% or lower.

4. The multilayer electronic component (100) of claim 1,
wherein the dielectric layer (111) includes a core-shell dielectric grain (10) including a core (11) and a shell (12) structure surrounding at least a portion of the core (11), and
wherein an average atomic percentage of Si in at least one of the secondary phases (141) is higher than an average atomic percentage of Si in the shell (12).

5. The multilayer electronic component (100) of claim 1, wherein the dielectric layer (111) includes a plurality of dielectric grains, and an average diameter of the plurality of dielectric grains is 150 nm or more 220 nm or less.

6. The multilayer electronic component (100) of claim 1,
wherein the dielectric layer (111) includes a core-shell dielectric grain (10) including a core (11) and a shell (12) structure surrounding at least a portion of the core (11), and
wherein a diameter of the core (11) is 90 nm or more and 140 nm or less.

7. The multilayer electronic component (100) of claim 1, wherein the dielectric layer (111) includes a main component that includes a barium titanate (BaTiO₃)-based material.

8. The multilayer electronic component (100) of claim 7,
wherein the dielectric layer (111) further includes a first sub-component element,
wherein the first sub-component element is one or more of Mn, V, Cr, Fe, Co, Ni, Cu, Co, and Zn, and
wherein a number of moles of the first sub-component element based on 100 moles of Ti included in the dielectric layer is 0.4 moles or more and 0.8 moles or less.

9. The multilayer electronic component (100) of claim 7,
wherein the dielectric layer (111) further includes a second sub-component element,
wherein the second sub-component element is Mg, and
wherein a number of moles of the second sub-component elements based on 100 moles of Ti included in the dielectric layer is more than 0 moles and 1 mole or less.

10. The multilayer electronic component (100) of claim 7,
wherein the dielectric layer (111) further includes third sub-component elements,
wherein the third sub-component elements are rare earth elements, and
wherein a number of moles of the third sub-component elements based on 100 moles of Ti included in the dielectric layer is 2.5 moles or more 3.5 moles or less.

11. The multilayer electronic component (100) of claim 7,
wherein the dielectric layer (111) further includes a fourth sub-component element,
wherein the fourth sub-component element is Si, and
wherein a number of moles of the fourth sub-component element based on 100 moles of Ti included in the dielectric layer is 0.8 moles or more and 2.0 moles or less.

12. The multilayer electronic component (100) of claim 1, wherein td µm is 10.0 um or less.

13. The multilayer electronic component (100) of claim 1, wherein the multilayer electronic component (100) satisfies at least one of properties:
(i) room temperature dielectric constant is 2200 or more,
(ii) dielectric loss is 10% or lower,
(iii) insulation resistance at 150°C is 1.0E+6 Ω or more,
(iv) a capacitance change rate at -55°C to 125°C based on capacitance at 25° is 150 or lower,
(v) a DC-bias change rate under electric field of 10 V/um is 70% or lower, or
(vi) mean time to failure (MTTF) under temperature of 150°C and electric field of 10 V/um is 100 hours or more.
